# EUROPÄISCHE PATENTSCHRIFT

(11) **EP 2 370 792 B1**
(45) Veröffentlichungstag und Bekanntmachung des Hinweises auf die Patenterteilung: **25.04.2018**
(21) Anmeldenummer: 09806084.1
(22) Anmeldetag: 30.12.2009
(51) Int. Cl.: G01F 1/08

(54) **VOLUMENZÄHLER FÜR FLÜSSIGKEITEN**
VOLUME COUNTER FOR FLUIDS
COMPTEUR VOLUMÉTRIQUE DE LIQUIDES

(30) Priorität: 31.12.2008 DE 102008063261
(43) Veröffentlichungstag der Anmeldung: 05.10.2011
(73) Patentinhaber: Elster Messtechnik GmbH, 68623 Lampertheim (DE)
(72) Erfinder: AMEIS, Rüdiger, 69221 Dossenheim (DE)
(74) Vertreter: Eickmeyer, Dietmar
(86) Internationale Anmeldenummer: PCT/EP2009/009327
(87) Internationale Veröffentlichungsnummer: WO 2010/076029

(56) Entgegenhaltungen:
- EP-A1- 1 965 180
- DE-A1- 19 961 036
- DE-A1-102006 046 864

## Beschreibung

Die Erfindung betrifft einen Volumenzähler für Flüssigkeiten, insbesondere einen elektronischen Mehrstrahl-Wasserzähler beziehungsweise -messer nach dem Oberbegriff des Anspruchs 1.

Herkömmliche Volumenzähler für Flüssigkeiten, insbesondere elektronische Volumenzähler, welche in aller Regel eine Zähleinrichtung, einen Messeinsatz mit einem drehbar gelagerten Flügelrad mit Flügelradwelle und eine Impulszähleranordnung aufweisen, und wobei die Impulszähleranordnung einen Impulsgeberträger mit wenigstens einem Impulsgeber aufweist und die Impulszähleranordnung sowohl mit der Zähleinrichtung als auch der Flügelradwelle beziehungsweise dem Flügelrad zusammenwirkt, um die Durchflussmenge zu bestimmen und/oder anzugeben, müssen grundsätzlich für eine vertikale und eine horizontale Einbaulage verwendbar sein, wobei sie in aller Regel auf eine horizontale Einbaulage optimiert sind.

Wird ein demgemäßer Zähler jedoch in vertikaler Einbaulage beziehungsweise Einbauposition verbaut, so sind aufgrund der ungünstigeren Lagerlauf-Position mit diesem jedoch nur deutlich schlechtere beziehungsweise ungenauere Messergebnisse mit höherem Fehlerwert erreichbar.

Nachteilig weisen herkömmliche Volumenzähler keinerlei Möglichkeiten auf die jeweilige Einbaulage des Zählers beim Einbau und/oder in verbautem Zustand zu bestimmen und/oder zu überprüfen, sowie die ermittelte Lage, insbesondere Winkellage, resultierend zu verwerten, beispielsweise im Rahmen einer Konditionierung und/oder Re-Kalibrierung sowie Optimierung der Messwerterfassung.

Der Erfindung liegt somit die Aufgabe zu Grunde einen Volumenzähler anzugeben, welcher eine Bestimmung und Verwertung seiner Einbaulage und insbesondere seiner Winkellage bezüglich wenigstens einer vorbestimmbaren Achse erlaubt.

Vorgenannte Aufgabe wird durch einen Volumenzähler mit den Merkmalen des Anspruchs 1 gelöst. Vorteilhafte Ausgestaltungen und Weiterbildungen sind in weiteren Ansprüchen und der nachfolgenden Beschreibung angegeben.

Der erfindungsgemäße Volumenzähler für Flüssigkeiten umfasst demgemäß ein Rechenwerk, eine Volumenmesseinrichtung mit einem von einem Medium durchströmbaren Messraum mit wenigstens einem Zufluss sowie wenigstens einem Ablauf, sowie mit einer Zähleranordnung, wobei eine Sensoranordnung mit wenigstens einem Neigungssensor vorgesehen ist, mit welcher Sensoranordnung die Achs- und/oder Winkellage der Zähleinrichtung in Bezug und/oder Relation zu wenigstens einer vorbestimmbaren Koordinatenachse und/oder Richtung bestimmbar ist, gemäß Anspruch 1. In vorteilhafter Ausgestaltung umfasst die Zähleranordnung einen im Messraum drehbeweglich gelagerten Messkörper, der von dem durch den Messraum strömenden Medium in Drehbewegung versetzbar ist.

Insbesondere handelt es sich um einen Flügelradzähler, wobei der Messkörper der Zähleranordnung ein Flügelrad mit Flügelradwelle umfasst, oder um einen Ringkolbenzähler, wobei der Messkörper der Zähleranordnung einen exzentrisch gelagerten Kolben mit Drehwelle umfasst, wobei insbesondere die Winkellage der Welle der Zähleinrichtung in Bezug und/oder Relation zu wenigstens einer vorbestimmbaren Koordinatenachse und/oder Richtung bestimmbar ist.

In einer weiteren Ausgestaltung ist der eingesetzte Volumenzähler als Mehrstrahl-Volumenzähler und insbesondere als Mehrstrahl-Wasserzähler sowie Mehrstrahl-Flügelradzähler ausgebildet.

In vorteilhafter Ausgestaltung weist die Zähleranordnung wenigstens einen Impulsgeber und wenigstens einen Impulssensor auf, wobei der wenigstens eine Impulsgeber mit dem Messkörper der Zähleranordnung in Wirkverbindung steht und mit dem wenigstens einen Impulssensor derart zusammenwirkt, dass Drehbewegungen des Messkörpers in Form volumenproportionaler Impulse vom Impulssensor erfassbar sind.

In vorteilhafter Weiterbildung ist der Impulssensor der Zähleranordnung mit dem Rechenwerk derart koppelbar, dass Drehbewegungen des Messkörpers vom Rechenwerk erfassbar und/oder in ein Volumen umrechenbar sind, wobei die Umrechnung vorteilhaft elektronisch erfolgen kann.

In alternativer Ausgestaltung ist der Messkörper der Zähleranordnung, insbesondere dessen Welle, vermittels eines Getriebes mit wenigstens einem Zahnrad sowie wenigstens einer Welle mit dem Rechenwerk derart koppelbar, dass Drehbewegungen des Messkörpers vom Rechenwerk erfassbar und/oder in ein Volumen umrechenbar sind, wobei die Umrechnung vermittels einer entsprechenden Übersetzung oder Untersetzung des Getriebes durchführbar ist.

In vorteilhafter Weiterbildung sind Impulsgeber und Impulssensor der Impulszähleranordnung derart aufeinander abgestimmt und/oder wirken derart zusammen, dass der Impulsgeber im Impulssensor ein Impulssignal hervorruft, dessen Impulsdauer derjenigen Zeitspanne entspricht, die das jeweilige Geberelement des Impulsgebers im Sensorbereich verbringt. Bei dem Impulssensor kann es sich dabei beispielsweise um einen induktiven, kapazitiven oder auch optischen Sensor handeln, wobei Geberelement und Impulsgeber entsprechend auf den Sensor abzustimmen beziehungsweise abgestimmt sind.

Der optische Sensor könnte beispielsweise aus einer LED und einer lichtempfindlichen Photozelle gebildet sein, wobei LED und Photozelle derart angeordnet sind, dass bei Auftreten eines Impulssignals, der emittierte Lichtstrahl der LED auf den entsprechenden Impulsgeber trifft und von dessen Geberelement, beispielsweise einer hochreflektierenden Schicht, insbesondere einer hochreflektierenden Gold- oder Silberschicht, auf die Photozelle reflektiert wird.

Vorteilhaft kann der wenigstens eine Impulssensor auch in das Rechenwerk integriert sein.

Weiterbildend wechselwirken beziehungsweise koppeln Zähleranordnung und Rechenwerk dabei elektrisch, elektromagnetisch, induktiv, kapazitiv, optisch oder mechanisch oder einer Kombination daraus.

In einer vorteilhaften Ausgestaltung ist wenigstens eine erste Schnittstelle und/oder wenigstens eine erste Kommunikationsverbindung vorgesehen, über welche die Sensoranordnung mit dem Rechenwerk des Volumenzählers zusammenwirkt und/oder Lageinformationen an das Rechenwerk übermittelbar sind.

In einer vorteilhaften Weiterbildung umfasst das Rechenwerk wenigstens eine Verarbeitungseinheit, beispielsweise auch in der Art eines Mikroprozessors, Mikrokontrollers (MCU) oder ASICs, durch welche mittels Verwertung und/oder Verarbeitung an das Rechenwerk übermittelter Lageinformationen eine lageabhängige Optimierung der Messeigenschaften beziehungsweise Zähleigenschaften und/oder eine Verbesserung der Messergebnisse und Verringerung der Fehlerwerte bewirkbar ist.

In einer weiteren Ausgestaltung ist wenigstens eine zweite Schnittstelle und/oder wenigstens eine zweite Kommunikationsverbindung zum Daten- beziehungsweise Informationsaustausch mit wenigstens einem übergeordneten Datenverarbeitungssystem oder einer Datenverarbeitungseinrichtung und/oder mit wenigstens einem entsprechenden Leit- und/oder Prozessleitsystem vorgesehen.

In einer vorteilhaften Weiterbildung verwertet und/oder verarbeitet das übergeordnete Datenverarbeitungssystem oder die Datenverarbeitungseinrichtung und/oder das wenigstens eine Leit- und/oder Prozessleitsystem die übermittelten Lageinformationen und/oder bewirkt im Zusammenwirken mit dem Rechenwerk eine lageabhängige Optimierung der Messeigenschaften beziehungsweise Zähleigenschaften und/oder eine Verbesserung der Messergebnisse und Verringerung der Fehlerwerte der Volumenmesseinrichtung, sowie insbesondere der Zähleranordnung .

In vorteilhafter Weiterbildung ist die jeweilige Kommunikationsverbindung drahtlos ausgebildet und insbesondere als Funk-, Infrarot, Bluetooth- und/oder WLAN-Verbindung beziehungsweise Schnittstelle ausgestaltet.

In Weiterbildung des Volumenzählers ist wenigstens eine zweite Schnittstelle als Schnittstellenmodul ausgebildet und/oder über eine dafür vorgesehene Aufnahme an den Volumenzähler anbindbar beziehungsweise anschließbar und/oder in diesen integrierbar.

In einer weiteren vorteilhaften Ausgestaltung des Volumenzählers ist die Anordnung zur Aufnahme und Anbindung einer Sensoranordnung mit wenigstens einem Neigungssensor im beziehungsweise am Rechenwerk ausgebildet.

In vorteilhafter Ausgestaltung des Volumenzählers ist dabei wenigstens ein Neigungssensor als MEMS, magnetoresistiver, elektrolytischer und/oder kapazitiver Neigungssensor und/oder als Hall-Sensor, Servo- und/oder Inklinometer und/oder Rotationssensor ausgebildet.

MEMS ist dabei gebräuchliche Abkürzung für Micro Electrical Mechanical Systems, bei welchen es sich um elektrische und mechanische Systeme im Mikrometerbereich beziehungsweise um mechanische Systeme der Mikrosystemtechnik handelt.

Durch Verwendung einer Sensoranordnung mit wenigstens zwei Neigungssensoren, welche derart angeordnet sind, dass die Winkellagen von zwei jeweils senkrecht zueinander ausgerichteten beziehungsweise senkrecht aufeinander stehenden Achsen ermittelbar sind, lässt sich die räumliche Ausrichtung beziehungsweise Orientierung der Volumenmesseinrichtung und/oder der Zähleranordnung sowie insbesondere der Drehwelle des Messkörpers, beispielsweise der Flügelradwelle, bestimmen.

Alternativ ist auch ein Neigungssensor einsetzbar, welcher eine gleichzeitige Bestimmung von zwei oder mehr Winkellagen erlaubt.

Der abdeckbare beziehungsweise überdeckbare Messbereich beginnt dabei mit Neigungssensoren bei ±1° und endet bei den Rotationssensoren bei mehreren 360° Umdrehungen, wobei der jeweilig erfassbare Messbereich vergleichsweise stark vom jeweiligen Sensortyp abhängt.

Die weitere Darlegung der Erfindung sowie vorteilhafter Ausgestaltungen erfolgt anhand einer Figur und diesbezüglicher Ausführungsbeispiele.

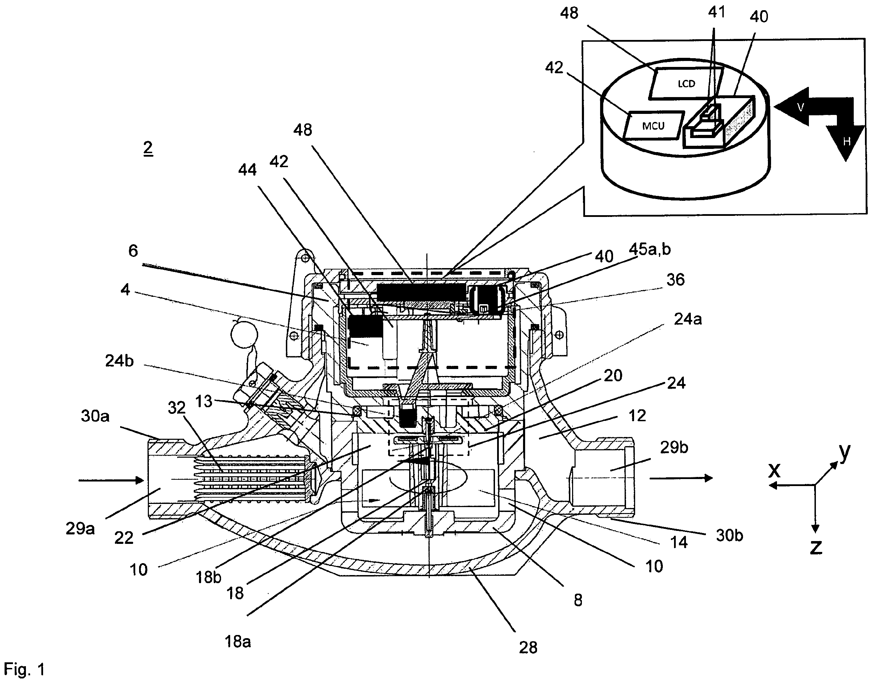

Die einzige Figur zeigt einen beispielhaft ausgestalteten erfindungsgemäßen Volumenmesser mit Neigungssensor zur Lagebestimmung.

Dieser Volumenzähler 2 besitzt ein elektronisches Rechenwerk 4, welches in einem becherartig ausgebildeten Rechenwerkeinsatzgehäuse 6 angeordnet ist, sowie eine Volumenmesseinrichtung mit einem als Becher ausgebildeten Messeinsatzgehäuse 8 und mit Zuflüssen 10 und einem Ablauf 12, in dem ein als Flügelrad 14 ausgebildeter Messkörper drehbar angeordnet ist. Das becherartig ausgestaltete Messeinsatzgehäuse 8 weist einen Becherboden auf, in dem in einem ersten Lager 16a ein erstes Ende einer das Flügelrad 14 tragenden Flügelradwelle 18 drehbar gelagert ist. Des weiteren ist eine erste Lagerplatte 20 mit einem zweiten Lager 16b vorgesehen, in dem ein zweites Ende 18b der Flügelradwelle 18 drehbar gelagert ist und welche Lagerplatte 20 das Messeinsatzgehäuse 8 nach oben begrenzt und gemeinsam mit dem Messeinsatzgehäuse 8 den eigentlichen Messraum 22 einschließt.

Auf das Messeinsatzgehäuse 8 stützen sich die erste Lagerplatte 20 sowie das Rechenwerkeinsatzgehäuse 6 ab. Die Volumenmesseinrichtung weist weiterhin eine Zähleranordnung 24, insbesondere eine Impulszähleranordnung, mit wenigstens einem Impulsgeber 24a mit wenigstens einem Geberelement 25 und wenigstens einem Impulssensor 24b auf, wobei der wenigstens eine Impulsgeber 24a mit der Flügelradwelle 18 in Wirkverbindung steht, insbesondere fest beziehungsweise starr mit dieser und/oder dem Flügelrad 14 verbunden ist, und mit dem wenigstens einen Impulssensor 24b zusammenwirkt. Im hier gezeigten Beispiel ist der Impulsgeber 24a im Nahbereich der ersten Lagerplatte 20 fest mit dem Flügelrad 14 verbunden. Die Oberflächennormale des Impulsgebers 24a ist dabei parallel zur Flügelradwelle 18 ausgerichtet. Des Weiteren weist die erste Lagerplatte 20 einen Abdichtring 13 zur Abdichtung gegen das Rechenwerkeinsatzgehäuse 6 auf. Weiterhin ist ein Volumenzählergehäuse 28 mit einem Zulauf 29a sowie einem Ablauf 29b vorgesehen, welches Volumenzählergehäuse 28 die Volumenmesseinrichtung und zumindest anteilig auch das Rechenwerkeinsatzgehäuse 6 aufnimmt und auf welchem sich das Messeinsatzgehäuse 8 abstützt. Das Volumenzählergehäuse 28 weist jeweils eine zulauf- 30a und ablaufseitige 30b Anschlußmöglichkeit an beziehungsweise in ein entsprechendes Leitungssystem auf, wobei auf der Zuleitungsseite ein Partikelfilter 32 integriert ist. Weiterhin ist eine Kopfverschraubung mit Deckel vorgesehen, durch welche Rechenwerkeinsatzgehäuse 6 mit Einbauten, erste Lagerplatte 20, Messeinsatzgehäuse 8 mit Einbauten und Volumenzählergehäuse 28 gegeneinander fixiert und/oder gehaltert werden.

Impulsgeber 24a und Impulssensor 24b der Impulszähleranordnung 24 sind aufeinander abgestimmt und wirken derart zusammen, dass der Impulsgeber 24a im Impulssensor 24b ein Impulssignal hervorruft, dessen Impulsdauer derjenigen Zeitspanne entspricht, die ein Geberelement 25 im Sensorbereich verbringt. Ist das Geberelement 25 aus elektrisch leitendem und/oder reflektierendem beziehungsweise hochreflektierendem Material gebildet, so kann der zugehörige Impulssensor 24b entsprechend induktiver oder optischer Art beispielsweise als elektromagnetische Spule beziehungsweise Spulenanordnung oder Lichtquelle/Photosensor-Kombination ausgebildet sein.

Im vorliegenden Beispiel rufen die Umdrehungen des Messelementes 14 und damit des Impulsgebers 24a, welcher ein metallisches Element aufweist, bei Durchlaufen des Sensorbereichs eine messbare Veränderung einer induktiven Schwelle des als elektromagnetische Spule ausgebildeten Impulssensors 24b und damit einen volumenproportionalen Impuls hervor.

Weiterhin umfasst der Volumenzähler 2 wenigstens eine Anordnung 36 zur Aufnahme und Anbindung beziehungsweise Anschluss einer Sensoranordnung 40 mit wenigstens einem Neigungssensor sowie eine demgemäße Sensoranordnung 40, mit hier beispielhaft zwei Neigungssensoren 41, mit welcher Sensoranordnung 40 die Achs- und/oder oder Winkellage des jeweiligen Volumenzählers 2 in Bezug und/oder Relation zu einer vorbestimmbaren Koordinatenachse und/oder Richtung, hier horizontal und vertikal, ermittelbar und/oder bestimmbar ist. Die Neigungssensoren der Sensoranordnung 40 sind dabei derart angeordnet, dass Winkellagen beziehungsweise Drehungen um die x- und y-Achse, das heißt um gedachte Verbindungslinie zwischen Zulauf und Ablauf und senkrecht dazu, bestimmbar sind.

Die Aufnahme 36 für die Sensoranordnung 40 ist dabei in das Rechenwerk 4 integriert.

Darüber hinaus kann der Volumenzähler derart weitergebildet sein, dass ein Funkmodul vorgesehen ist über welches beispielsweise Informationen die Einbaulage betreffend drahtlos an eine Datenverarbeitungseinrichtung übermittelbar sind.

Die Sensoranordnung 40, welche zwei Neigungssensoren 41 umfasst, ist dabei als Steckmodul ausbildbar, wobei zur Übermittlung der Lageinformationen an das Rechenwerk 4 eine drahtlos, beispielsweise mittels Infrarot, Funk oder Bluetooth, oder drahtgebunden, beispielsweise mittels USB, Ethernet, RS-232 oder einer anderen gängigen Busverbindung, ausgebildete erste Kommunikationsschnittstelle 45a vorsehbar ist. Weiterbildend verfügt das Rechenwerk 4 über eine dazu passende beziehungsweise darauf angepasste, insbesondere komplementär ausgebildete Kommunikationsschnittstelle 45b.

Das Rechenwerk 4 des elektronischen Volumenzählers umfasst wenigstens eine als Mikrokontroller (MCU) ausgebildete Verarbeitungseinheit 42, welche die von der Sensoranordnung 40 an das Rechenwerk 4 übermittelten Lageinformationen, insbesondere den logischen Stand des jeweiligen Wasserzählers betreffend, empfängt und/oder verwertet beziehungsweise verarbeitet und/oder resultierend eine lageabhängige Optimierung der Messeigenschaften beziehungsweise Zähleigenschaften und/oder eine Verbesserung der Messergebnisse und Verringerung der Fehlerwerte bewirkt.

Demgemäß werden die diesbezüglichen Informationen zählerintern durch das Rechenwerk 4 verarbeitet und zur Konditionierung und Optimierung der Zähleigenschaften, insbesondere der Genauigkeit eingesetzt.

Ergänzend ist eine weitere Schnittstelle, insbesondere eine drahtlos ausgebildete Schnittstelle, und Kommunikationsverbindung zum Daten- beziehungsweise Informationsaustausch mit wenigstens einem übergeordneten Datenverarbeitungssystem oder einer Datenverarbeitungseinrichtung und/oder einem Leit- und/oder Prozessleitsystem vorgesehen.

Darüber hinaus ist der Volumenzähler 2 derart ausgebildet, dass die zweite Schnittstelle als Funkmodul 42 ausgebildet ist, über welches Informationen die Einbaulage betreffend drahtlos an eine externe Datenverarbeitungseinrichtung, beispielsweise eines übergeordneten Steuer- und/oder Leitsystems, übermittelt werden.

Alternativ, beispielsweise auch aus redundanzgründen und/oder zur Überprüfung, sind die ans Rechenwerk 4 übermittelten Lageinformationen auch an das übergeordnete Datenverarbeitungssystem oder die Datenverarbeitungseinrichtung und/oder das wenigstens eine Leit- und/oder Prozessleitsystem zur weiteren Verarbeitung übertragbar, wobei dann im Zusammenwirken mit dem Rechenwerk 4 eine lageabhängige Optimierung der Messeigenschaften beziehungsweise Zähleigenschaften und/oder eine Verbesserung der Messergebnisse und Verringerung der Fehlerwerte der Volumenmesseinrichtung, sowie insbesondere der Zähleranordnung, auch durch das Datenverarbeitungssystem oder die Datenverarbeitungseinrichtung und/oder das wenigstens eine Leit- und/oder Prozessleitsystem bewirkbar ist.

Die Übermittlung und/oder Abfrage der Lageinformationen beziehungsweise der Sensordaten der Sensoranordnung 40 mit Neigungssensor ist dabei zyklisch oder kontinuierlich und/oder auf Anfrage, beispielsweise auf Anfrage durch das Datenverarbeitungssystem, die Datenverarbeitungseinrichtung, das Leit- und/oder Prozessleitsystem oder die Verarbeitungseinheit 42 des Rechenwerks 4, bewirkbar beziehungsweise durchführbar.

Zur Anzeige der ermittelten Lageinformationen oder auch anderer zählerspezifischer Informationen und/oder Kennzahlen ist eine elektronische Anzeigeeinrichtung 48, beispielsweise in der Art eines LCD oder TFT-Displays, vorgesehen, welche mit der Verarbeitungseinheit 42 zusammenwirkt.

## Patentansprüche

1. Volumenzähler für Flüssigkeiten mit einem Rechenwerk (4), sowie einer Volumenmesseinrichtung mit einem von einem Medium durchströmbaren Messraum, sowie mit wenigstens einem Zufluss (29a) sowie wenigstens einem Ablauf (29b), sowie mit einer Zähleranordnung, **dadurch gekennzeichnet, dass** wenigstens eine Sensoranordnung (40) mit wenigstens einem Neigungssensor (41) vorgesehen ist, mit welcher Sensoranordnung (40) die Achs- oder Winkellage des Volumenzählers in Bezug und in Relation zu wenigstens einer vorbestimmbaren Achse oder Richtung ermittelt und bestimmt wird und wobei
- die wenigstens eine Sensoranordnung mit wenigstens einem Neigungssensor modular ausgebildet ist, wobei die wenigstens eine Sensoranordnung über wenigstens eine dafür vorgesehene Aufnahme mit dem Volumenzähler verbunden und in diesen integriert ist;
- die wenigstens eine Sensoranordnung wenigstens zwei Neigungssensoren umfasst, oder einen Neigungssensor umfasst, welcher eine gleichzeitige Bestimmung von zwei oder mehr Winkellagen erlaubt, so dass die Winkellagen von zwei jeweils senkrecht zueinander ausgerichteten beziehungsweise senkrecht aufeinander stehenden Achsen ermittelbar sind und sich die räumliche Ausrichtung und Orientierung der Volumenmesseinrichtung oder der Zähleranordnung sowie insbesondere der Drehwelle des Messkörpers bestimmen lässt.

2. Volumenzähler nach Anspruch 1, **dadurch gekennzeichnet, dass** die Zähleranordnung einen im Messraum (22) drehbeweglich gelagerten Messkörper, der von dem durch den Messraum (22) strömenden Medium in Drehbewegung versetzt wird, umfasst.

3. Volumenzähler nach Anspruch 2, **dadurch gekennzeichnet, dass** es sich um einen Flügelradzähler handelt, wobei der Messkörper der Zähleranordnung ein Flügelrad (14) mit Flügelradwelle (18) umfasst, oder dass es sich um einen Ringkolbenzähler handelt, wobei der Messkörper der Zähleranordnung einen exzentrisch gelagerten Kolben mit Drehwelle umfasst.

4. Volumenzähler nach einem der vorherigen Ansprüche, **dadurch gekennzeichnet, dass** es sich um einen Mehrstrahl-Volumenzähler handelt.

5. Volumenzähler nach einem der vorherigen Ansprüche, **dadurch gekennzeichnet, dass** die Zähleranordnung wenigstens einen Impulsgeber (24a) und wenigstens einen Impulssensor (24b) aufweist, wobei der wenigstens eine Impulsgeber (24a) mit dem Messkörper der Zähleranordnung in Wirkverbindung steht und mit dem wenigstens einen Impulssensor (24b) derart zusammenwirkt, dass Drehbewegungen des Messkörpers in Form volumenproportionaler Impulse vom Impulssensor (24b) erfasst werden.

6. Volumenzähler nach Anspruch 5, **dadurch gekennzeichnet, dass** der Impulssensor (24b) der Zähleranordnung mit dem Rechenwerk (4) derart gekoppelt ist, dass Drehbewegungen des Messkörpers vom Rechenwerk (4) erfasst und in ein Volumen umgerechnet werden, wobei die Umrechnung elektronisch durchführbar ist.

7. Volumenzähler nach Anspruch 5 oder 6, **dadurch gekennzeichnet, dass** der Messkörper der Zähleranordnung, insbesondere dessen Welle (18), vermittels eines Getriebes mit wenigstens einem Zahnrad sowie wenigstens einer Welle (18) mit dem Rechenwerk (4) derart gekoppelt ist, dass Drehbewegungen des Messkörpers vom Rechenwerk (4) erfasst und in ein Volumen umgerechnet werden, wobei die Umrechnung vermittels einer entsprechenden Übersetzung oder Untersetzung des Getriebes durchführbar ist.

8. Volumenzähler nach einem der vorherigen Ansprüche 5 bis 7, **dadurch gekennzeichnet, dass** Impulsgeber (24a) und Impulssensor (24b) der Impulszähleranordnung derart aufeinander abgestimmt sind und derart zusammenwirken, dass der Impulsgeber (24a) im Impulssensor (24b) ein Impulssignal hervorruft, dessen Impulsdauer derjenigen Zeitspanne entspricht, die ein jeweiliges Geberelement (25) des Impulsgebers (24a) im Sensorbereich verbringt.

9. Volumenzähler nach einem der vorherigen Ansprüche, **dadurch gekennzeichnet, dass** wenigstens eine erste Schnittstelle oder wenigstens eine erste Kommunikationsverbindung vorgesehen ist, über welche die Sensoranordnung (40) mit dem Rechenwerk (4) des Volumenzählers zusammenwirkt und Lageinformationen an das Rechenwerk (4) übermittelt werden.

10. Volumenzähler nach einem der vorherigen Ansprüche, **dadurch gekennzeichnet, dass** das Rechenwerk (4) wenigstens eine Verarbeitungseinheit (44) umfasst, welche durch Verwertung und Verarbeitung an das Rechenwerk (4) übermittelter Lageinformationen eine lageabhängige Optimierung der Messeigenschaften beziehungsweise Zähleigenschaften und eine Verbesserung der Messergebnisse und Verringerung der Fehlerwerte bewirkt.

11. Volumenzähler nach einem der vorherigen Ansprüche, **dadurch gekennzeichnet, dass** wenigstens eine zweite Schnittstelle (42) und/oder wenigstens eine zweite Kommunikationsverbindung zum Daten- beziehungsweise Informationsaustausch mit wenigstens einem übergeordneten Datenverarbeitungssystem oder einer Datenverarbeitungseinrichtung und/oder mit wenigstens einem entsprechenden Leit- und/oder Prozessleitsystem vorgesehen ist.

12. Volumenzähler nach Anspruch 11, **dadurch gekennzeichnet, dass** die übermittelten Lageinformationen vom übergeordneten Datenverarbeitungssystem oder der Datenverarbeitungseinrichtung und/oder vom wenigstens einen Leit- und/oder Prozessleitsystem verwertet und/oder verarbeitet werden und/oder im Zusammenwirken mit dem Rechenwerk (4) eine lageabhängige Optimierung der Messeigenschaften beziehungsweise Zähleigenschaften und eine Verbesserung der Messergebnisse und Verringerung der Fehlerwerte der Volumenmesseinrichtung, sowie insbesondere der Zähleranordnung, bewirkt wird.

13. Volumenzähler nach einem der Ansprüche 9 bis 12, **dadurch gekennzeichnet, dass** wenigstens eine Kommunikationsverbindung drahtlos ausgebildet und insbesondere als Funk-, Infrarot, Bluetooth- und/oder WLAN-Verbindung beziehungsweise Schnittstelle ausgestaltet ist.

14. Volumenzähler nach einem der Ansprüche 9 bis 13, **dadurch gekennzeichnet, dass** wenigstens eine Schnittstelle (43) als Schnittstellenmodul ausgebildet und über eine dafür vorgesehene Aufnahme an den Volumenzähler anbindbar beziehungsweise anschließbar und in diesen integrierbar ist.

## Claims

1. Volume counter for liquids having an arithmetic unit (4) and a volume measuring device with a measuring space through which a medium can flow, and with at least one inflow (29a) and at least one outflow (29b), as well as with a counter arrangement, **characterized in that** at least one sensor arrangement (40) with at least one inclination sensor (41) is provided, with which sensor arrangement (40) the axial position or angular position of the volume counter with respect to and in relation to at least one predeterminable axis or direction is obtained and determined, and wherein
- the at least one sensor arrangement is embodied in a modular fashion with at least one inclination sensor,
wherein the at least one sensor arrangement is connected to the volume counter and integrated therein by means of at least one receptacle which is provided for this purpose;
- the at least one sensor arrangement comprises at least two inclination sensors or comprises one inclination sensor which permits simultaneous determination of two or more angular positions, with the result that the angular positions of two axles which are respectively oriented perpendicularly with respect to one another or positioned perpendicularly one on the other can be determined, and the spatial alignment and orientation of the volume measuring device or of the counter arrangement as well as, in particular, of the rotational shaft of the measuring body can be determined.

2. Volume counter according to Claim 1, **characterized in that** the counter arrangement comprises a measuring body which is mounted in a rotationally movable fashion in the measuring space (22) and is set in rotational movement by the medium which flows through the measuring space (22).

3. Volume counter according to Claim 2, **characterized in that** it is an impeller wheel counter, wherein the measuring body of the counter arrangement comprises an impeller wheel (14) with an impeller wheel shaft (18), or that it is a ring piston counter, wherein the measuring body of the counter arrangement comprises an eccentrically mounted piston with a rotational shaft.

4. Volume counter according to one of the preceding claims, **characterised in that** it is a multi-jet volume counter.

5. Volume counter according to one of the preceding claims, **characterized in that** the counter arrangement has at least one pulse generator (24a) and at least one pulse sensor (24b), wherein the at least one pulse generator (24a) is operatively connected to the measuring body of the counter arrangement and interacts with the at least one pulse sensor (24b) in such a way that rotational movements of the measuring body are detected in the form of volume-proportional pulses by the pulse sensor (24b).

6. Volume counter according to Claim 5, **characterized in that** the pulse sensor (24b) of the counter arrangement is coupled to the arithmetic unit (4) in such a way that rotational movements of the measuring body are detected by the arithmetic unit (4), and are converted into a volume, wherein the conversion can be carried out electronically.

7. Volume counter according to Claim 5 or 6, **characterized in that** the measuring body of the counter arrangement, in particular of the shaft (18) thereof, is coupled to the arithmetic unit (4) by means of a transmission with at least one gear wheel and at least one shaft (18), in such a way that rotational movements of the measuring body are detected by the arithmetic unit (4) and converted into a volume, wherein the conversion can be carried out by means of a corresponding gear reduction ratio or transmission ratio of the transmission.

8. Volume counter according to one of the preceding Claims 5 to 7, **characterized in that** the pulse generator (24a) and pulse sensor (24b) of the pulse counter arrangement are matched to one another in such a way and interact with one another in such that the pulse generator (24a) brings about a pulse signal in the pulse sensor (24b), the pulse duration of which pulse signal corresponds to that time period which a respective signal generator element (25) of the pulse generator (24a) spends in the sensor region.

9. Volume counter according to one of the preceding claims, **characterized in that** at least one first interface or at least one first communication connection is provided via which the sensor arrangement (40) interacts with the arithmetic unit (4) of the volume counter, and positional information is transmitted to the arithmetic unit (4) .

10. Volume counter according to one of the preceding claims, **characterized in that** the arithmetic unit (4) comprises at least one processing unit (44) which, by evaluating and processing position information which is transferred to the arithmetic unit (4) brings about position-dependent optimization of the measuring properties or counting properties and improvement of the measuring results and reduction of the fault values.

11. Volume counter according to one of the preceding claims, **characterized in that** at least one second interface (42) and/or one second communication connection for exchanging data and/or information with at least one superordinate data processing system or a data processing device and/or with at least one corresponding control system and/or process control system is provided.

12. Volume counter according to Claim 11, **characterized in that** the transferred position information is evaluated and/or processed by the superordinate data processing system or the data processing device and/or by at least one control system and/or process control system, and/or position-dependent optimization of the measuring properties or counting properties and improvement of the measuring results and reduction of the fault values of the volume measuring device as well as, in particular, of the counting arrangement, is brought about through interaction with the arithmetic unit (4).

13. Volume counter according to one of Claims 9 to 12, **characterized in that** at least one communication connection is embodied in a wireless fashion and is configured, in particular, as a radio connection or interface, infrared connection or interface, Bluetooth connection or interface, and/or WLAN connection or interface.

14. Volume counter according to one of Claims 9 to 13, **characterized in that** at least one interface (43) is embodied as an interface module and can be connected to and integrated into the volume counter by means of a receptacle which is provided for that purpose.

## Revendications

1. Compteur volumétrique de liquides pour liquides avec une unité de calcul (4), ainsi qu'avec un mécanisme de mesure des volumes comprenant une chambre de mesure pouvant être parcourue par un fluide, ainsi qu'avec tout au moins un orifice d'entrée (29a) ainsi que tout au moins un orifice de sortie (29b), ainsi qu'avec un dispositif formant compteur,
**caractérisé en ce que** tout au moins un dispositif à capteur (40) est prévu avec tout au moins un capteur de tangage (41), au moyen duquel dispositif à capteur (40) la position de l'axe ou de l'angle du compteur volumétrique de liquides est calculée et déterminée par rapport à et en relation avec tout au moins un axe ou une direction qui peut être prédéterminé (e) ; et selon lequel
- le tout au moins un dispositif à capteur est conçu de manière modulaire avec tout au moins un capteur de tangage ;
selon lequel le tout au moins un dispositif à capteur est raccordé au compteur volumétrique de liquides par l'intermédiaire de tout au moins un logement prévu à cet effet et est intégré dans celui-ci ;
- le tout au moins un dispositif à capteur comprend tout au moins deux capteurs de tangage ou comprend un seul capteur de tangage qui permet une détermination simultanée de deux positions angulaires ou plus, de telle sorte que les positions angulaires de respectivement deux axes peuvent être calculées, lesquels sont alignés de manière perpendiculaire l'un par rapport à l'autre, ou bien sont dressés de manière perpendiculaire l'un par rapport à l'autre, et qu'il est ainsi possible de déterminer l'alignement et l'orientation dans l'espace du mécanisme de mesure des volumes ou du dispositif formant compteur ainsi que, en particulier, de l'arbre de rotation du corps de mesure.

2. Compteur volumétrique de liquides selon la revendication 1, **caractérisé en ce que** le dispositif formant compteur comprend un corps de mesure, lequel est positionné, de manière mobile en rotation, dans la chambre de mesure (22) et lequel est entraîné dans un mouvement de rotation par le fluide qui circule à travers la chambre de mesure (22).

3. Compteur volumétrique de liquides selon la revendication 2, **caractérisé en ce que** ledit compteur volumétrique de liquides est un compteur à roue à ailettes ;
selon lequel le corps de mesure du dispositif formant compteur comprend une roue à ailettes (14) avec un arbre de roue à ailettes (18) ; ou
**caractérisé en ce que** ledit compteur volumétrique de liquides est un compteur à piston annulaire ;
selon lequel le corps de mesure du dispositif formant compteur comprend un piston doté d'un arbre de rotation, lequel piston est positionné de manière excentrique.

4. Compteur volumétrique de liquides selon l'une des revendications qui précèdent, **caractérisé en ce que** compteur volumétrique de liquides est un compteur volumétrique de liquides à jets multiples.

5. Compteur volumétrique de liquides selon l'une des revendications qui précèdent, **caractérisé en ce que** le dispositif formant compteur présente tout au moins un générateur d'impulsions (24a) et tout au moins un capteur d'impulsions (24b) ;
selon lequel le tout au moins un générateur d'impulsions (24a) se trouve en liaison active avec le corps de mesure du dispositif formant compteur et interagit de telle sorte avec le tout au moins un capteur d'impulsions (24b) que les mouvements de rotations du corps de mesure sont détectés par le capteur d'impulsions (24b) sous la forme d'impulsions proportionnelles au volume.

6. Compteur volumétrique de liquides selon la revendication 5, **caractérisé en ce que** le capteur d'impulsions (24b) du dispositif formant compteur est couplé de telle sorte avec l'unité de calcul (4) que les mouvements de rotation du corps de mesure sont détectés par l'unité de calcul (4) et sont convertis en un volume,
selon lequel la conversion peut être réalisée de manière électronique.

7. Compteur volumétrique de liquides selon la revendication 5 ou 6, **caractérisé en ce que** le corps de mesure du dispositif formant compteur, en particulier son arbre (18), est couplé de telle sorte à l'unité de calcul (4), au moyen d'une transmission comprenant tout au moins une roue à dents ainsi que tout au moins un arbre (18), que les mouvements de rotation du corps de mesure sont détectés par l'unité de calcul (4) et sont convertis en un volume, selon lequel la conversion peut être réalisée au moyen d'une multiplication ou d'une démultiplication correspondante de la transmission.

8. Compteur volumétrique de liquides selon l'une des revendications 5 à 7 qui précèdent, **caractérisé en ce que** le générateur d'impulsions (24a) et le capteur d'impulsions (24b) du dispositif formant compteur d'impulsions sont coordonnés de telle sorte l'un par rapport à l'autre et interagissent de telle sorte que le générateur d'impulsions (24a) induit un signal d'impulsions dans le capteur d'impulsions (24b), dont la durée des impulsions correspond à la période de temps qu'un élément de capteur (25) respectif du générateur d'impulsions (24a) passe dans la zone du capteur.

9. Compteur volumétrique de liquides selon l'une des revendications qui précèdent, **caractérisé en ce que** tout au moins une première interface ou tout au moins une première liaison de communication est prévue, par l'intermédiaire de laquelle le dispositif à capteur (40) interagit avec l'unité de calcul (4) du compteur volumétrique de liquides et par l'intermédiaire de laquelle des informations sur la position sont transmises à l'unité de calcul (4).

10. Compteur volumétrique de liquides selon l'une des revendications qui précèdent, **caractérisé en ce que** l'unité de calcul (4) comprend tout au moins une unité de traitement (44), laquelle déclenche une optimisation des propriétés de mesure, respectivement des propriétés de comptage, en fonction de la position, ainsi qu'une amélioration des résultats de mesure et une diminution des valeurs d'erreur grâce à l'évaluation et au traitement des informations sur la position qui ont été transmises à l'unité de calcul (4).

11. Compteur volumétrique de liquides selon l'une des revendications qui précèdent, **caractérisé en ce que** tout au moins une deuxième interface (42) et/ou tout au moins une deuxième liaison de communication est ou sont prévues en vue de l'échange de donnée ou d'informations avec tout au moins un système de traitement des données de couche supérieure, ou avec tout au moins un mécanisme de traitement des données et/ou avec tout au moins un système de contrôle et/ou un système de gestion des processus correspondants.

12. Compteur volumétrique de liquides selon la revendication 11, **caractérisé en ce que** les informations sur la position qui ont été transmises sont exploitées et/ou traitées par le système de traitement des données de couche supérieure ou par le mécanisme de traitement des données et/ou par le tout au moins un système de contrôle et/ou le tout au moins un système de gestion des processus et/ou une optimisation des propriétés de mesure, respectivement des propriétés de comptage, en fonction de la position, ainsi qu'une amélioration, des résultats de mesure et une diminution des valeurs d'erreur du mécanisme de mesure des volumes, ainsi que, en particulier, du dispositif formant compteur sont mises en oeuvre en coopération avec l'unité de calcul (4).

13. Compteur volumétrique de liquides selon l'une des revendications 9 à 12, **caractérisé en ce que** tout au moins une liaison de communication est conçue sans fil et, en particulier, est configurée sous la forme d'une communication radio, d'une communication infrarouge, d'une communication de type Bluetooth et/ou de type Wi-Fi, respectivement sous la forme d'une interface.

14. Compteur volumétrique de liquides selon l'une des revendications 9 à 13, **caractérisé en ce que** tout au moins une interface (43) est conçue sous la forme d'un module d'interface et peut être combinée, respectivement peut être raccordée avec le compteur volumétrique de liquides par l'intermédiaire d'un logement prévu à cet effet et peut être intégrée dans celui-ci.
